# EUROPÄISCHE PATENTANMELDUNG

(11) **EP 3 945 615 A1**
(43) Veröffentlichungstag der Anmeldung: **02.02.2022**
(21) Anmeldenummer: 21168140.8
(22) Anmeldetag: 13.04.2021
(51) Int. Cl.: H01M 8/04029, B60H 1/00, F25B 15/16, H01M 8/04007, H01M 8/04082, H01M 8/0438

(54) **ENERGIEWANDELANORDNUNG ZUR UMWANDLUNG CHEMISCHER ENERGIE IN ELEKTRISCHE ENERGIE UND VERFAHREN ZUM BETREIBEN EINER ENERGIEWANDELANORDNUNG**

(30) Priorität: 27.07.2020 DE 102020119730
(71) Anmelder: Deutsches Zentrum für Luft- und Raumfahrt e.V., 53227 Bonn (DE)
(72) Erfinder: KORDEL, Markus, 70565 Stuttgart (DE); DITTUS, Holger, 75397 Simmozheim (DE)
(74) Vertreter: Fleck, Hermann-Josef

(57) **Zusammenfassung**

Die Erfindung betrifft eine Energiewandelanordnung (1) zur Umwandlung chemischer Energie in elektrische Energie, mit einer Brennstoffzellenanordnung (3) zur Erzeugung elektrischer Energie aus einem gasförmigen Energieträger, insbesondere Wasserstoff, einer Speichereinrichtung (2) zur Speicherung des Energieträgers unter Hochdruck, mit einem Druckunterschied zu dem Arbeitsdruck der Brennstoffzellenanordnung (3), einem Energieträgerkreislauf (10) zur Leitung des Energieträgers von der Speichereinrichtung (2) zu der Brennstoffzellenanordnung (3), einem Kühlkreislauf (20) zur Leitung von Kühlfluid über die Brennstoffzellenanordnung (3) zur Kühlung derselben, umfassend eine Kühleinrichtung (22), und einer thermisch getriebenen Kältemaschine (5). Eine effiziente Energiewandelanordnung (1) wird dadurch bereitgestellt, dass die thermisch getriebene Kältemaschine (5) zur Nutzung des Kühlfluids zur Versorgung mit einem treibenden Wärmestrom innerhalb des Kühlkreislaufes (20) angeordnet ist (Fig. 1).

## Beschreibung

Die Erfindung betrifft eine Energiewandelanordnung zur Umwandlung chemischer Energie in elektrische Energie, mit einer Brennstoffzellenanordnung zur Erzeugung elektrischer Energie aus einem gasförmigen Energieträger, insbesondere Wasserstoff, einer Speichereinrichtung zur Speicherung des Energieträgers unter Hochdruck, mit einem Druckunterschied zu dem Arbeitsdruck der Brennstoffzellenanordnung, einem Energieträgerkreislauf zur Leitung des Energieträgers von der Speichereinrichtung zu der Brennstoffzellenanordnung, einem Kühlkreislauf zur Leitung von Kühlfluid über die Brennstoffzellenanordnung zur Kühlung derselben, umfassend eine Kühleinrichtung, und einer thermisch getriebenen Kältemaschine. Die Erfindung betrifft ferner ein Verfahren zum Betreiben einer Energiewandelanordnung.

Bei flüssiggekühlten Brennstoffzellenanordnungen, wie sie z. B. in mobilen Anwendungen zum Einsatz kommen, wird der größere Teil der im Betrieb erzeugten Abwärme über einen externen Kühlkreislauf abgeführt. Dabei werden Temperaturen in dem Kühlkreislauf von beispielsweise 60 °C bis 70 °C erreicht. In den Wintermonaten kann diese Wärmeleistung z. B. zum Heizen einer Fahrzeugkabine verwendet werden. Wenn kein Heizbedarf vorhanden ist, wird die entstehende Abwärme derzeit in der Regel unter Aufwand zusätzlicher Energie an die Umgebung abgegeben und ist nicht nutzbar.

Eine Möglichkeit, mittels einer Brennstoffzellenanordnung erzeugte Abwärme zu nutzen, von der auch die vorliegende Erfindung ausgeht, ist in der DE 10 2010 032 886 A1 angegeben. Dabei umfasst ein elektrisches Energieversorgungssystem neben einer Brennstoffzelle eine Adsorptionskältemaschine, die mittels Abwärme aus dem Bereich der Zufuhr und/oder Abfuhr von Medien zu/von der Brennstoffzelle als Wärmequelle betrieben wird. Die Temperaturen der genutzten Medien liegen dabei typischerweise zwischen 150 °C und 250 °C. Abwärmeströme mit geringeren Temperaturniveaus werden dabei nicht genutzt.

Die DE 10 2010 032 886 A1 zeigt eine Energiewandelanordnung mit einer Brennstoffzellenanordnung, einer Speichereinrichtung für den Energieträger, betreffenden Leitungen für den Energieträgerkreislauf, einem Kühlmittelkreislauf der Brennstoffzellenanordnung und auch einem Kältekreislauf, über den Wärme des Kühlkreislaufs abgeführt werden kann.

Die DE 10 2014 207 597 A1 zeigt ebenfalls eine Energiewandelanordnung mit einer Brennstoffzellenanordnung. Dabei wird die Abwärme der Brennstoffzellenanordnung über eine Wärmeübertragungsvorrichtung in einen Fahrgastraum weitergeleitet.

Die DE 602 04 976 T2, die ebenfalls eine Brennstoffzellenanordnung in einem Fahrzeug zum Inhalt hat, weist zudem Kühlmittel- und Kältemittelkreisläufe auf.

Auch die EP 1 264 715 A2 zeigt eine Energiewandelanordnung mit Brennstoffzellenanordnung sowie Kühlmittel- und Kältemittelkreisläufe.

Die DE 10 2015 006 944 B3 offenbart eine Energiewandelanordnung mit Brennstoffzellenanordnung und einer Klimatisierungsanordnung für ein wasserstoffbetriebenes Fahrzeug, wobei ein erster Metallhydridspeicher und ein zweiter Metallhydridspeicher vorhanden sind, die getaktet mittels einer Steuereinheit betrieben werden.

In der DE 10 2016 122 252 A1 wird Abwärme einer Brennstoffzelle unter Verwendung einer Wärmepumpe umfassend einen Verdampfer, einen Kondensator, einen Kompressor und ein Expansionsventil genutzt.

Der Erfindung liegt die Aufgabe zugrunde, eine durch verbesserte Nutzbarkeit von Abwärme effizientere Energiewandelanordnung und ein entsprechendes Verfahren bereitzustellen.

Die Aufgabe wird für die Energiewandelanordnung mit den Merkmalen des Anspruchs 1 und für das Verfahren mit den Merkmalen des Anspruchs 15 gelöst. Bei der Energiewandelanordnung ist vorgesehen, dass die thermisch getriebene Kältemaschine, insbesondere die Adsorptionskältemaschine, zur Nutzung des Kühlfluids zur Versorgung mit einem treibenden Wärmestrom innerhalb des Kühlkreislaufes angeordnet ist. Auf diese Weise kann die durch das Kühlfluid abgeführte Abwärme, die einen großen Teil der mittels der Brennstoffzellenanordnung erzeugten Abwärme darstellt, einer weiteren Nutzung zugeführt werden, was der Gesamteffizienz der Energiewandelanordnung zugutekommt. Die mittels der thermisch getriebenen Kältemaschine erzeugte Kälte kann insbesondere einer Kühlumgebung, z. B. einer Fahrzeugkabine, zugeführt werden.

In einer besonders effizienzsteigernden Ausbildungsvariante ist vorgesehen, dass innerhalb des Kühlkreislaufes zwischen der Brennstoffzellenanordnung (bzgl. deren Kühlfluid-Austrittsseite) und der thermisch getriebenen Kältemaschine eine Einrichtung zur Temperaturerhöhung des Kühlfluids angeordnet ist. Die Temperaturerhöhung des Kühlfluids nach Durchströmen der Einrichtung zur Temperaturerhöhung kann beispielsweise zwischen 5 K und 50 K, insbesondere zwischen 10 K und 30 K betragen. Durch die Temperaturerhöhung kann der Wirkungsgrad der thermisch getriebenen Kältemaschine deutlich erhöht und so die Abwärme des Brennstoffzellensystems effizienter ausgenutzt werden.

Besonders effizient lässt sich die Temperaturerhöhung erreichen, wenn die Einrichtung zur Temperaturerhöhung strömungstechnisch in dem Energieträgerkreislauf angeordnet ist und (dabei)/oder unter Ausnutzung des Druckunterschieds betreibbar ist, wobei die Druckenergie zwischen der Speichereinrichtung und der Brennstoffzellenanordnung genutzt wird. Durch die Nutzung des Druckgefälles zum Betreiben der Einrichtung kann z. B. auf eine Verbrennung von Energieträger, insbesondere Wasserstoff, zur Temperaturerhöhung verzichtet werden. Hingegen kann vorteilhaft die Druckenergie des in der Speichereinrichtung gespeicherten Energieträgers, insbesondere Wasserstoffs, die gemäß dem Stand der Technik in der Regel über eine Drossel an die Umgebung abgegeben wird, verwendet werden, um den Wirkungsgrad der thermisch getriebenen Kältemaschine zu steigern.

In einer besonders bevorzugten Ausbildungsvariante umfasst die Einrichtung zur Temperaturerhöhung zumindest einen ersten Reaktor mit einem Reaktionsmaterial, in welchem in einem Absorptionsbetrieb unter Ablauf einer (reversiblen) thermochemischen Gas-Feststoffreaktion innerhalb eines Reaktionssystems umfassend Energieträger und das Reaktionsmaterial Wärme zur Abgabe an das Kühlfluid erzeugbar bzw. erzeugt ist, wobei Energieträger in dem Reaktionsmaterial absorbiert wird, wobei der erste Reaktor in dem Kühlkreislauf strömungstechnisch stromauf der thermisch getriebenen Kältemaschine angeordnet (bzw. eingekoppelt) ist. Somit ist die Einrichtung zur Temperaturerhöhung basierend auf dem Prinzip der reversiblen thermochemischen Gas-Feststoff-Reaktion ausgebildet. Dabei wird in einem Reaktionssystem, gebildet aus einem Gas, vorliegend Energieträger (insbesondere Wasserstoff) und einem Reaktionsmaterial in Form eines Feststoffes (z. B. ein Metall (in einer ersten Form) bzw. Metallhydrid (in einer zweiten Form)) Wärme freigesetzt, wobei in einer Absorptionsreaktion des Gases in dem Reaktionsmaterial eine chemische Umwandlung des Reaktionsmaterials von einer ersten Form (z. B. einem Metall) in die zweite Form (z. B. ein Metallhydrid) erfolgt. In der umgekehrten Desorptionsreaktion des Gases von dem Reaktionsmaterial erfolgt die chemische Rückumwandlung des Reaktionsmaterials in die erste Form unter Wärmeaufnahme bzw. Kältefreisetzung. Das Prinzip der reversiblen thermochemischen Gas-Feststoff-Reaktion ist in der Veröffentlichung "Linder M, Kulenovic R, An energy-efficient air-conditioning system for hydrogen driven cars, Int. J Hydrogen Energy 2011, 36: 3215-3221" im Zusammenhang mit einem Versuchsaufbau zu Untersuchungen zur Kälteerzeugung zum Einsatz in einem offenen System angegeben.

Eine vorteilhaft kontinuierliche Wärmeerzeugung ist erreichbar, wenn die Einrichtung zur Temperaturerhöhung zumindest einen zweiten Reaktor mit einem Reaktionsmaterial (vorzugsweise in gleicher Art und Menge wie in dem ersten Reaktor) umfasst, in welchem wechselweise zu dem ersten Reaktor in dem Absorptionsbetrieb Wärme zur Übertragung an das Kühlfluid erzeugbar bzw. erzeugt ist, wobei der zweite Reaktor (während des Absorptionsbetriebs) in dem Kühlkreislauf strömungstechnisch stromauf der thermisch getriebenen Kältemaschine angeordnet (bzw. eingekoppelt) ist. Vorzugsweise wird dabei der jeweils andere Reaktor in einem Desorptionsbestrieb regeneriert, wobei er vorteilhaft zur Kühlung des Kühlfluids beitragen kann.

Eine besonders effiziente Energiewandelanordnung ergibt sich, wenn in einem Halbzyklus einer der Reaktoren im Absorptionsbetrieb betreibbar bzw. betrieben ist, wobei Energieträger aus der Speichereinrichtung zur Absorption in den jeweiligen Reaktor leitbar bzw. geleitet ist, und der jeweils andere Reaktor in dem Kühlkreislauf stromab der thermisch getriebenen Kältemaschine angeordnet ist und in einem Desorptionsbetrieb betreibbar bzw. betrieben ist, wobei unter Ablauf der umgekehrten thermochemischen Gas-Feststoffreaktion innerhalb des Reaktionssystems Kälte zur Übertragung auf das Kühlfluid erzeugbar bzw. erzeugt ist (d. h. diesem unter Kühlung Wärme entzogen wird), wobei Energieträger von dem Reaktionsmaterial unter Wärmeaufnahme desorbiert und an die Brennstoffzellenanordnung geleitet wird und dass nach einer Halbzykluszeit in einem Umschaltvorgang die Strömungsverbindungen (insbesondere mittels Umschaltung entsprechend ausgebildeter Ventilmittel) des Energieträgers und/oder des Kühlfluids umschaltbar bzw. umgeschaltet sind und anschließend in dem anderen Halbzyklus die jeweils anderen Reaktoren im Absorptionsbetrieb und im Desorptionsbetrieb betreibbar bzw. betrieben sind. Dabei wird insbesondere die Strömungsrichtung des Kühlfluids derart umgeschaltet, dass der jeweils im Absortionsbetrieb befindliche Reaktor stromauf der thermisch getriebenen Kältemaschine und der jeweils im Desorptionsbetrieb befindliche Reaktor stromab der thermisch getriebenen Kältemaschine angeordnet ist. Auf diese Weise wird eine äußerst effizient in das Gesamtsystem (d. h. die Energiewandelanordnung) eingebundene Einrichtung zur Temperaturerhöhung bereitgestellt, die neben der Erwärmung des Kühlfluids auch zu dessen Kühlung, vor Eintritt in die Brennstoffzellenanordnung, beitragen kann.

Insbesondere vorhandene Ventilmittel zur Änderung der Strömungsrichtung des Kühlfluids in dem Kühlkreislauf können zeitversetzt umschaltbar bzw. umgeschaltet sein, wobei insbesondere zunächst Ventilmittel stromauf der Reaktoren und nach einer Umschaltzeit stromab angeordnete Ventilmittel umschaltbar bzw. umgeschaltet sind. Die Umschaltzeit kann z. B. der Durchströmzeit des Kühlfluids ausgehend von dem stromauf angeordneten Ventilmittel bis zu dem stromab angeordneten Ventilmittel entsprechen. Durch die zeitversetzte Umschaltung kann ein Restvolumen an Kühlfluid, welches sich zwischen stromauf- und stromab der Reaktoren angeordneten Ventilmitteln befindet, zunächst abströmen. Dadurch wird verhindert, dass ein Restvolumenstrom an kaltem bzw. warmem Kühlfluid jeweils unerwünschter Weise in die umgekehrte Richtung strömt. So kann ein ungestörter Betrieb der Komponenten trotz des Umschaltvorgangs, z. B. der thermisch getriebenen Kältemaschine, gewährleistet werden. Während des Umschaltens kann auch der Energieträgerstrom in die bzw. aus den Reaktoren unterbrochen werden und z. B. die Brennstoffzellenanordnung über einen Bypassabschnitt mit Energieträger versorgt werden.

In einer besonders bevorzugten Ausbildungsvariante sind insbesondere mittels einer Steuereinrichtung in dem Absorptionsbetrieb ein hoher Betriebsdruck, höher als der niedrige Betriebsdruck, z. B. mehr als 35 bar, jedoch geringer als der Druck innerhalb der Speichereinrichtung, und in dem Desorptionsbetrieb ein diesem gegenüber niedriger Betriebsdruck, z. B. 5 bar oder geringer, jedoch höher als der Arbeitsdruck der Brennstoffzellenanordnung, in dem bzw. den Reaktor/en einstellbar bzw. eingestellt. Durch die Einstellbarkeit (Steuerbarkeit bzw. Regelbarkeit) des Druckniveaus lässt sich eine bedarfsoptimierte und genaue Temperatursteuerung in Zusammenhang mit der während des Absorptionsbetriebs bzw. Desorptionsbetriebs erzeugten bzw. aufgenommenen Wärme erreichen. Denn bei dem Prinzip der thermochemischen Gas-Feststoff-Reaktion ist das Temperaturniveau in einer materialspezifischen Gleichgewichtscharakteristik an das an dem Reaktionsmaterial anliegende Druckniveau gekoppelt.

Vorzugsweise sind/ist der jeweilige Betriebsdruck in dem/den Reaktor/en und/oder die Energieträger-Massenströme zu bzw. von dem/den Reaktor/en in Abhängigkeit von Randbedingungen, insbesondere zur Einhaltung einer erforderlichen Temperatur des Kühlfluids zum Eintritt in die thermisch getriebene Kältemaschine und/oder einer erforderlichen thermischen Leistung, einstellbar bzw. eingestellt. Auf diese Weise lässt sich die Leistung der Einrichtung zur Temperaturerhöhung bedarfsgerecht einstellen und so insbesondere an die Leistung der Brennstoffzellenanordnung anpassen. Vorteilhafterweise besteht sowohl bei der Wärmeerzeugung innerhalb des Absorptionsbetriebs als auch bei der Erzeugung der Abwärme innerhalb der Brennstoffzellenanordnung (gekoppelt an deren Leistung) eine ähnliche, nämlich lineare Abhängigkeit von dem Bedarf an Energieträger, so dass sich die Art der Wärmeerzeugung und elektrischer Energieerzeugung vorteilhaft ergänzen.

Für eine flexible und/oder optimierte Betriebsweise umfasst der Energieträgerkreislauf einen Bypassabschnitt, mittels dessen die Einrichtung zur Temperaturerhöhung zumindest zeitweise zumindest von einem Teilstrom des Energieträgers umströmbar bzw. umströmt ist. So kann insbesondere in dem Falle, dass kein Kühlbedarf besteht und die thermisch getriebene Kältemaschine nicht betrieben wird, die Einrichtung zur Temperaturerhöhung strömungstechnisch aus dem Energieträgerkreislauf abgekoppelt werden. Auch kann die Brennstoffzellenanordnung über den Bedarf der Einrichtung zur Temperaturerhöhung an Energieträger hinaus mit Energieträger versorgt werden.

Ebenfalls einer flexiblen und/oder optimierten Betriebsweise ist es zuträglich, wenn der Kühlkreislauf einen Bypassabschnitt umfasst, mittels dessen die Einrichtung zur Temperaturerhöhung und/oder die thermisch getriebene Kältemaschine zumindest zeitweise zumindest von einem Teilstrom des Kühlfluids über einen Bypassabschnitt umströmbar bzw. umströmt ist. So kann einerseits in dem Falle, dass kein Kühlbedarf besteht, die thermisch getriebene Kältemaschine und/oder die Einrichtung zur Temperaturerhöhung aus dem Kühlkreislauf strömungstechnisch abgekoppelt werden, sodass lediglich die Kühleinrichtung und die Brennstoffzellenanordnung als wesentliche Komponenten der Energiewandelanordnung von Kühlfluid durchströmt werden. Zudem kann vorteilhaft der Massenstrom an Kühlfluid bzw. dessen Aufteilung, hinsichtlich einer Temperatur in dem Kühlkreislauf gesteuert bzw. geregelt werden.

Insbesondere in diesem Zusammenhang ist es vorteilhaft, wenn der Massenstrom des Kühlfluids (mittels der Steuereinrichtung und/oder des Bypassabschnittes umfassend ein entsprechend ausgebildetes Ventilmittel) derart steuerbar bzw. regelbar ist, dass eine Temperatur des Kühlfluids stromab der Brennstoffzellenanordnung und stromauf der Einrichtung zur Temperaturerhöhung zumindest im Wesentlichen (z. B. abgesehen von (kurzzeitigen) technisch bedingten Schwankungen) konstant ist, auch bei sich änderndem Lastpunkt der Brennstoffzelle. Vorzugsweise orientiert sich die eingestellte Temperatur dabei an der maximalen möglichen Betriebstemperatur der Brennstoffzelle, so dass diese gerade nicht überschritten wird. Beispielsweise wird die Temperatur so eingestellt, dass diese z. B. bis zu 10 K oder bis zu 5 K unterhalb der maximalen Temperatur für einen sicheren Betrieb der Brennstoffzelle liegt. Auf diese Weise werden vorteilhaft konstante, insbesondere hinsichtlich einer hohen Eintrittstemperatur für die thermisch getriebene Kältemaschine günstige Randbedingungen bereitgestellt, die die Effizienz der thermisch getriebenen Kältemaschine erhöhen.

In einer bevorzugten Ausbildungsvariante umfasst das Reaktionsmaterial einen Feststoff (insbesondere in Form eines Schüttguts und/oder von Presskörpern) aufweisend ein Metallhydrid, insbesondere eine Titan-Mangan-Legierung, und/oder ist der Energieträger durch Wasserstoff gebildet. Die genaue Art des Reaktionsmaterials wird insbesondere in Zusammenhang mit den geforderten Druck- und Temperaturrandbedingungen für den Betrieb der Einrichtung zur Temperaturerhöhung ausgewählt.

Vorzugsweise ist die Kühleinrichtung stromab der thermisch getriebenen Kältemaschine sowie stromauf oder stromab des im Desorptionsbetrieb befindlichen Reaktors angeordnet.

Vorteilhafte Ausführungsvarianten des Verfahrens sind in Zusammenhang mit den vorstehend beschriebenen Anordnungs- bzw. Vorrichtungsvarianten sinngemäß beschrieben. Zur Durchführung des Verfahrens (unter dessen Steuerung bzw. Regelung) umfasst die dabei verwendete Energiewandelanordnung insbesondere eine entsprechend ausgebildete Steuereinrichtung.

Nachfolgend wird die Erfindung anhand von Ausführungsbeispielen unter Bezugnahme auf die Zeichnung näher erläutert. Es zeigt:

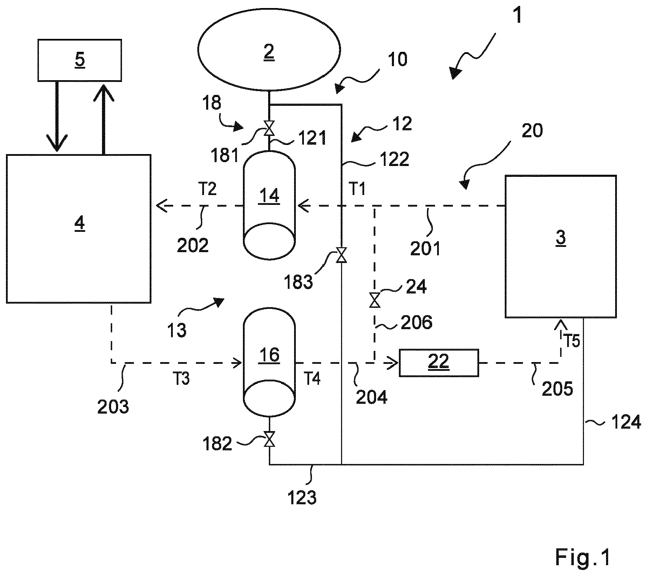

- Fig. 1: ein Fließschema mit einer Energiewandelanordnung umfassend eine thermisch getriebene Kältemaschine, die in einem Kühlkreislauf angeordnet ist.

Fig. 1 zeigt in einem Fließschema eine Energiewandelanordnung 1 zur Umwandlung von chemischer Energie (in einem, insbesondere gasförmigen, Energieträger gespeicherte Energie) in elektrische Energie mittels einer Brennstoffzellenanordnung 3. Neben der, insbesondere flüssiggekühlten, Brennstoffzellenanordnung 3 umfasst die Energiewandelanordnung 1 eine Speichereinrichtung 2, in der der Energieträger, insbesondere Wasserstoff, unter Hochdruck gespeichert ist. "Hochdruck" bedeutet, dass in der Speichereinrichtung 2 ein höherer Druck vorliegt als der Arbeitsdruck der Brennstoffzellenanordnung 3 (der Druck, bei dem die Brennstoffzellenanordnung 3 betrieben wird), wobei der Druck vor der ersten Wasserstoffentnahme beispielsweise bis zu 350 bar oder 700 bar betragen kann.

Ferner ist ein Energieträgerkreislauf 10 vorhanden (durchgezogene Linie), mittels dessen die Speichereinrichtung 2 mit der Brennstoffzellenanordnung 3 zur Versorgung mit dem Energieträger im Betrieb in Strömungsverbindung steht. Zudem weist die Energiewandelanordnung 1 einen Kühlkreislauf 20 auf (gestrichelte Linie), der zur Kühlung der Brennstoffzellenanordnung 3 im Betrieb ein Kühlfluid über die Brennstoffzellenanordnung 3 führt. Zur Einhaltung einer kritischen Betriebstemperatur der Brennstoffzellenanordnung 3 ist in dem Kühlkreislauf 20 eine Kühleinrichtung 22, beispielsweise ein (konventioneller) Fahrzeugkühler, angeordnet.

Zur Steuerung und/oder Regelung des Betriebs der Energiewandelanordnung 1 ist zudem eine Steuereinrichtung und, soweit erforderlich, Sensorik vorhanden (hier jeweils nicht gezeigt).

Um beim Betrieb der Brennstoffzellenanordnung 3 anfallende Abwärme energetisch nutzen zu können, umfasst die Energiewandelanordnung 1 zudem eine thermisch getriebene Kältemaschine 4, insbesondere eine Adsorptionskältemaschine. Die thermisch getriebene Kältemaschine 4 ist innerhalb des Kühlkreislaufes 20 angeordnet, so dass sie im Betrieb mit Kühlfluid versorgt bzw. von diesem durchströmt werden kann. Im Betrieb der thermisch getriebenen Kältemaschine 4 wird in dem Kühlfluid aus der Brennstoffzellenanordnung 3 mitgeführte Wärme genutzt, um Kälte zu erzeugen. Dabei dient der mittels des Kühlfluids transportierte Wärmestrom als treibende Kraft für den Adsorptionskälteprozess (unter physikalischer An- bzw. Einlagerung eines Kältemittels), wobei ein thermischer Verdichter der thermisch getriebenen Kältemaschine 4 betrieben wird, mit Desorption des Kältemittels der thermisch getriebenen Kältemaschine 4 unter Wärmeaufnahme aus dem Kühlfluid. Der auf diese Weise erzeugte Kältestrom dient zur Kühlung einer Kühlumgebung 5, bei der es sich z. B. um einen Raum, insbesondere um eine Fahrzeugkabine, handeln kann.

Für einen möglichst effizienten Betrieb der thermisch getriebenen Kältemaschine 4 ist dieser in dem Kühlkreislauf 20 eine Einrichtung zur Temperaturerhöhung 13 des Kühlfluids strömungstechnisch vorgeschaltet. Auf diese Weise kann die Temperatur des Kühlfluids stromab der Brennstoffzellenanordnung 3 von einer Temperatur T1 von beispielsweise etwa 65 °C, 70 °C oder 75 °C auf ein höheres Temperaturniveau mit einer Temperatur T2 angehoben werden, beispielsweise um 10 K bis 30 K. So kann der Wirkungsgrad der thermisch getriebenen Kältemaschine 4 erhöht und die Abwärme der Brennstoffzellenanordnung 3 effizienter genutzt werden.

Die Einrichtung zur Temperaturerhöhung 13 ist vorliegend vorteilhaft, neben dem Kühlkreislauf 20, in den Energieträgerkreislauf 10 eingekoppelt, wobei Druckenergie zwischen der Speichereinrichtung 2 und der Brennstoffzellenanordnung 3 für den Betrieb genutzt wird. Somit kann die Druckenergie des in der Speichereinrichtung 2 gespeicherten Energieträgers, welcher im Stand der Technik z. B. über eine Drossel an die Umgebung abgegeben wird, verwendet werden, um den Wirkungsgrad der thermisch getriebenen Kältemaschine 4 zu steigern. Die Druckenergie wird hierbei auf besonders effiziente Weise genutzt, indem die Einrichtung zur Temperaturerhöhung 13 basierend auf dem Prinzip der reversiblen thermochemischen Gas-Feststoff-Reaktion ausgebildet ist. Dabei wird in einem Reaktionssystem gebildet aus einem Gas und einem Reaktionsmaterial in Form eines Feststoffes (z. B. ein Metall (in einer ersten Form) bzw. Metallhydrid (in einer zweiten Form)) durch eine Absorptionsreaktion des Gases in dem Reaktionsmaterial unter chemischer Umwandlung des Reaktionsmaterials von der ersten Form in die zweite Form Wärme freigesetzt. In der umgekehrten Desorptionsreaktion des Gases von dem Reaktionsmaterial erfolgt die chemische Rückumwandlung des Reaktionsmaterials in die erste Form unter Wärmeaufnahme bzw. Kältefreisetzung.

Das Prinzip der thermochemischen Gas-Feststoff-Reaktion eignet sich insbesondere insofern zur Verwendung in der Einrichtung zur Temperaturerhöhung 13, als sowohl die Wärmeerzeugung durch die Absorptionsreaktion in dem Reaktionsmaterial als auch die Abwärme der Brennstoffzellenanordnung 3 linear von dem Bedarf an Energieträger der Brennstoffzellenanordnung 3 abhängen. Bei einer höheren Leistung der Brennstoffzellenanordnung 3 erhöht sich sowohl deren Energieträgerbedarf bzw. benötigter Energieträgermassenstrom als auch der Kühlbedarf bzw. Massenstrom an Kühlfluid. Durch den erhöhten Energieträgermassenstrom kann auch die Leistung der Einrichtung zur Temperaturerhöhung 13 erhöht werden, um wiederum den erhöhten Massenstrom an Kühlfluid zu erwärmen.

Das Reaktionsmaterial, insbesondere gleicher Art und Menge, ist vorliegend beispielhaft in einem ersten Reaktor 14 und in einem zweiten Reaktor 16 angeordnet, die zur kontinuierlichen Wärmeerzeugung wechselweise voneinander in einem Absorptionsbetrieb, unter Ablauf der Absorptionsreaktion, betrieben werden können. Der jeweils andere Reaktor 16, 14 kann unterdessen im Desorptionsbetrieb regeneriert werden, um anschließend erneut zur Wärmeerzeugung zur Verfügung zu stehen. Die Reaktoren 14 und 16 sind jeweils zum Wärmeaustausch zwischen dem Kühlfluid und dem Reaktionsmaterial ausgebildet.

Für den wechselweisen Betrieb umfasst der Kühlkreislauf 20 zudem eine Ventilanordnung (in Fig. 1 nicht vollständig gezeigt) sowie Leitungsmittel, mittels deren die strömungstechnische Anordnung der Reaktoren 14, 16 innerhalb des Kühlkreislaufes 20 bezüglich der thermisch getriebenen Kältemaschine 4 umgeschaltet werden kann. Der jeweils im Absorptionsbetrieb befindliche Reaktor 14 oder 16 ist in dem Kühlkreislauf 20 stromab der Brennstoffzellenanordnung 3 und stromauf der thermisch getriebenen Kältemaschine 4 angeordnet. Der jeweils andere Reaktor 16 oder 14 ist dann jeweils stromab der thermisch getriebenen Kältemaschine 4 angeordnet. Auf diese Weise kann vorteilhaft das stromab der thermisch getriebenen Kältemaschine 4 geringere Temperaturniveau des Kühlfluids (Temperatur T3) zur Regeneration des anderen Reaktors 16 oder 14 genutzt und das Kühlfluid vor Wiedereintritt in die Brennstoffzellenanordnung gekühlt werden.

Für eine optimierte Steuerbarkeit des Kühlfluid-Massenstroms, insbesondere hinsichtlich der Leistung der Brennstoffzellenanordnung 3, und des Betriebs der thermisch getriebenen Kältemaschine 4 umfasst der Kühlkreislauf 20 einen Strömungsabschnitt 206 mit einem Ventilmittel 24 zur Massenstromregelung des Kühlfluids. Der Strömungsabschnitt 206 dient als Bypassabschnitt zwischen dem Vor- und dem Rücklauf des Kühlfluids von der bzw. zu der Brennstoffzellenanordnung 3, mittels dessen die thermisch getriebene Kältemaschine 4 und/oder die Einrichtung zur Temperaturerhöhung 13 zumindest zeitweise zumindest von einem Teilstrom des Kühlfluids umgangen werden kann.

Die Kühleinrichtung 22 ist stromauf der Brennstoffzellenanordnung 3 vorliegend beispielhaft stromab des im Desorptionsbetrieb befindlichen Reaktors 16 oder 14 angeordnet. Möglich ist auch eine Anordnung stromauf des im Desorptionsbetrieb befindlichen Reaktors 16 oder 14.

Seitens des Energieträgerkreislaufs 10 sind die Reaktoren 14, 16 derart eingekoppelt, dass der im Absorptionsbetrieb Betrieb befindliche Reaktor 14 oder 16 mit der Speichereinrichtung 2 in Strömungsverbindung steht und mit einem hohen Betriebsdruck, bei oder unterhalb des Drucks der Speichereinrichtung 2, z. B. 35 bar oder höher, von dem Energieträger als Gas des Reaktionssystems beaufschlagt werden kann.

Der andere, im Desorptionsbetrieb befindliche Reaktor 16 oder 14 steht mit der Brennstoffzellenanordnung 3 zu deren Versorgung mit dem Energieträger nach Freisetzung des Energieträgers als Gas bei der Desorptionsreaktion in Strömungsverbindung. Dabei kann der andere Reaktor 16 oder 14 mit einem niedrigen Betriebsdruck betrieben werden, niedriger als der hohe Betriebsdruck, jedoch bei oder oberhalb des Arbeitsdrucks der Brennstoffzellenanordnung 3, beispielsweise bei 10 bar oder geringer, vorzugsweise bei 5 bar oder geringer.

Zur Umschaltung der strömungstechnischen Anordnung der beiden Reaktoren bezüglich der Speichereinrichtung 2 und der Brennstoffzellenanordnung 3 umfasst der Energieträgerkreislauf eine entsprechend ausgebildete Ventilanordnung 18 mit Ventilmitteln (vorliegend sind beispielhaft Ventilmittel 181, 182 und 183 gezeigt) und entsprechende Leitungsmittel 12.

Für eine möglichst flexible, bedarfsorientierte Steuerbarkeit bzw. Regelbarkeit umfasst der Energieträgerkreislauf 10 einen Strömungsabschnitt 122, der einen Bypassabschnitt bildet. Auf diese Weise ist die Einrichtung zur Temperaturerhöhung 13 zumindest zeitweise zumindest von einem Teilstrom an Energieträger umströmbar. Innerhalb des Bypassabschnitts ist das Ventilmittel 183 angeordnet, das als Druckminderer dient und den Bereich der Leitungsmittel 12 mit dem hohen Betriebsdruck (dickere Linie) von dem Bereich mit dem niedrigen Betriebsdruck (dünne Linie) trennt. So ist die Leistung der Brennstoffzellenanordnung 3 von der Leistung der Einrichtung zur Temperaturerhöhung 13 entkoppelbar.

Bei dem Betrieb der in Fig. 1 gezeigten Energiewandelanordnung befindet sich beispielhaft der Reaktor 14 im Absorptionsbetrieb und der Reaktor 16 im Desorptionsbetrieb. In dem Kühlkreislauf 20 strömt das über die Brennstoffzellenanordnung 3 erwärmte Kühlfluid über einen ersten Strömungsabschnitt 201 in den ersten Reaktor 14, wobei es eine Temperatur T1 aufweist. Der Massenstrom an Kühlfluid ist in Abhängigkeit der Leistung der Brennstoffzellenanordnung 3 und/oder der Kühlleistung der Kühleinrichtung 22 vorzugsweise mittels des Strömungsabschnitts 206 und des Ventilmittels 24 so eingestellt (gesteuert bzw. geregelt), dass die Temperatur T1 zumindest im Wesentlichen konstant ist. Insbesondere beträgt die Temperatur T1 nahe dem Maximum, bei welchem ein Betrieb der Brennstoffzellenanordnung möglich ist, beispielsweise maximal 5 K darunter (z. B. etwa 65 °C, 70 °C oder 75 °C). So weist das Kühlfluid bereits bei Austritt aus der Brennstoffzellenanordnung 3 ein möglichst hohes Temperaturniveau auf, welches anschließend durch die Einrichtung zur Temperaturerhöhung 13 weiter gesteigert wird, was dem Wirkungsgrad der thermisch getriebenen Kältemaschine 4 zugutekommt.

Innerhalb des Reaktors 14 nimmt das Kühlfluid Wärme auf, sodass es in einem Strömungsabschnitt 202 zwischen dem ersten Reaktor 14 und der thermisch getriebenen Kältemaschine 4 die Temperatur T2 aufweist. Der erste Reaktor 14 befindet sich dabei zur Wärmeerzeugung im Absorptionsbetrieb. Der Energieträger strömt von der Speichereinrichtung 2 über einen Strömungsabschnitt 121 und das Ventilmittel 181, das auch zur Einstellung des Energieträger-Massenstroms dient, in den ersten Reaktor 14, wo er von dem Reaktionsmaterial aufgenommen wird. An dem ersten Reaktor 14 liegt dabei der hohe Betriebsdruck von z. B. oberhalb von 35 bar an.

Die Temperatur T2 liegt beispielsweise zwischen 5 K und 30 K oberhalb der Temperatur T1. Vorzugsweise ist dabei die Temperatur T2 auf einen Auslegungspunkt hingesteuert bzw. geregelt, der sich z. B. als ein Optimum aus der treibenden Wärme bzw. Enthalpie für die thermisch getriebene Kältemaschine, einem Temperaturniveau zum Eintritt in die thermisch getriebene Kältemaschine 4 und der durch die thermisch getriebene Kältemaschine 4 abgegebenen Kühlleistung (Kühlenthalpie) ergibt. Ein derartiges Optimum ist insbesondere systemspezifisch und kann z. B. mittels Kennfelder der thermisch getriebenen Kältemaschine 4 ermittelt werden.

Innerhalb der thermisch getriebenen Kältemaschine 4 gibt das Kühlfluid Wärme an den Kälteprozess ab, die insbesondere innerhalb des thermischen Verdichters bzw. als Desorptionsenergie innerhalb der Kältemaschine 4 genutzt werden kann. So dient der mittels des Kühlfluids transportierte Wärmestrom als treibende Kraft für den Adsorptionskälteprozess. Die innerhalb der Kältemaschine 4 erzeugte Kälte wird an eine Kühlumgebung 5 abgegeben, wobei z. B. warme Luft aus der Kühlumgebung 5 in die Kältemaschine 4 aufgenommen, dort gekühlt und als kühle Luft wieder an die Kühlumgebung 5 abgegeben wird (in Fig. 1 als Pfeile angedeutet).

Über einen Strömungsabschnitt 203 strömt das nun (z.B. um bis zu 5 K oder bis zu 10 K erwärmte) Kühlfluid mit einer Temperatur T3 in den zweiten Reaktor 16 ein. Der zweite Reaktor 16 befindet sich zur Regeneration im Desorptionsbetrieb, wobei dem Kühlfluid Wärme unter Freisetzung von Energieträger entzogen wird. An dem zweiten Reaktor 16 liegt dabei der niedrige Betriebsdruck von z. B. unterhalb von 5 bar an. Der freigesetzte Energieträger strömt über das Ventilmittel 182 und Strömungsabschnitte 123 und 124 an die Brennstoffzellenanordnung 3 zu deren Versorgung mit Energieträger. In dem Strömungsabschnitt 124 kann der Massenstrom an Energieträger bei einem erhöhten Leistungsbedarf der Brennstoffzellenanordnung 3 gegenüber dem Massenstrom aus dem Reaktor 16 mittels eines Massenstroms über den Leitungsabschnitt 122 als Bypassabschnitt erhöht werden.

Das Kühlfluid strömt über einen Strömungsabschnitt 204 bei einer Temperatur T4 in die Kühleinrichtung 22, in der die Temperatur T4 auf eine von der Brennstoffzellenanordnung 3 geforderte Eintrittstemperatur des Kühlfluids (zur Einhaltung der Arbeitstemperatur) abgesenkt wird. Über einen Strömungsabschnitt 205 strömt das Kühlfluid schließlich bei einer Temperatur T5 wieder in die Brennstoffzellenanordnung 3 zu deren Kühlung.

Nach Beendigung der Regeneration in dem zweiten Reaktor 16 werden für den wechselweisen Betrieb die Ventilmittel der Ventilanordnung 18 (Energieträgerkreislauf 10) derart umgeschaltet, dass der Strömungsweg des Energieträgers und/oder die strömungstechnische Anordnung der Reaktoren 14, 16 bezüglich der Speichereinrichtung 2 bzw. der Brennstoffzellenanordnung 3 geändert ist. Der zweite Reaktor 16 ist nun mit der Speichereinrichtung 2 gekoppelt und von der Brennstoffzellenanordnung 3 entkoppelt und wird im Absorptionsbetrieb betrieben, wobei der hohe Betriebsdruck anliegt. Der erste Reaktor ist mit der Brennstoffzellenanordnung 3 gekoppelt und von der Speichereinrichtung 2 entkoppelt und wird zur Regeneration im Desorptionsbetrieb betrieben, wobei der niedrige Betriebsdruck anliegt. Zu diesem Zweck können insbesondere in Fig. 1 nicht gezeigte (weitere) Strömungsabschnitte und/oder Ventilmittel vorhanden sein.

Mit Umschaltung der Ventilmittel der Ventilanordnung 18 werden auch die Ventilmittel einer Ventilanordnung des Kühlkreislaufs 20 (in Fig. 1, mit Ventilmittel 24, nur teilweise gezeigt) derart umgeschaltet, dass das durch die Brennstoffzellenanordnung 3 erwärmte Kühlfluid stromauf der Kältemaschine 4 durch den nun im Absorptionsbetrieb befindlichen Reaktor 16 strömt und stromab der Kältemaschine 4 durch den nun im Desorptionsbetrieb befindlichen Reaktor 14. Zu diesem Zweck können in Fig. 1 nicht gezeigte (weitere) Strömungsabschnitte und/oder Ventilmittel vorhanden sein.

Die Umschaltung der Ventilmittel innerhalb des Kühlkreislaufes 20 bzw. der Ventilanordnung kann zeitgleich oder auch zeitversetzt erfolgen. Dabei können z. B. zunächst Ventilmittel stromauf der Reaktoren 14, 16 umgeschaltet werden und nach einer Umschaltzeit stromab angeordnete Ventilmittel. Die Umschaltzeit kann z. B. der Durchströmzeit des Kühlfluids ausgehend von dem stromauf angeordneten Ventilmittel bis zu dem stromab angeordneten Ventilmittel entsprechen. Durch die zeitversetzte Umschaltung kann ein Restvolumen an Kühlfluid, welches sich zwischen stromauf- und stromab angeordneten Ventilmitteln befindet, zunächst entsprechend abströmen. Dadurch wird verhindert, dass ein Restvolumenstrom an kaltem bzw. warmem Kühlfluid jeweils in die umgekehrte Richtung strömt. Dabei kann auch der Strom an Energieträger in bzw. aus den Reaktoren 14, 16 unterbrochen werden und z. B. die Brennstoffzellenanordnung 3 über den Strömungsabschnitt 122 mit Energieträger versorgt werden.

In dem Falle, dass kein Kühlbedarf mittels der thermisch getriebenen Kältemaschine 4 besteht, kann die thermisch getriebene Kältemaschine 4 mittels des als Bypassabschnitt fungierenden Strömungsabschnitts 206 aus dem Kühlkreislauf 20 strömungstechnisch abgekoppelt werden. In diesem Falle strömt das Kühlfluid aus der Brennstoffzellenanordnung 3 über den Strömungsabschnitt 206 in die Kühleinrichtung 22 und anschließend wieder in die Brennstoffzellenanordnung 3. Dabei wird zweckmäßigerweise auch die Einrichtung zur Temperaturerhöhung 13 aus dem Energieträgerkreislauf strömungstechnisch abgekoppelt, indem die Ventilmittel 181 und 182 geschlossen werden und der Energieträger über den Strömungsabschnitt 122 und das Ventilmittel 183, zur Druck- und/oder Massenstromregelung, und den Strömungsabschnitt 124 unmittelbar in die Brennstoffzellenanordnung 3 strömt.

## Patentansprüche

1. Energiewandelanordnung (1) zur Umwandlung chemischer Energie in elektrische Energie, mit
- einer Brennstoffzellenanordnung (3) zur Erzeugung elektrischer Energie aus einem gasförmigen Energieträger, insbesondere Wasserstoff,
- einer Speichereinrichtung (2) zur Speicherung des Energieträgers unter Hochdruck, mit einem Druckunterschied zu dem Arbeitsdruck der Brennstoffzellenanordnung (3),
- einem Energieträgerkreislauf (10) zur Leitung des Energieträgers von der Speichereinrichtung (2) zu der Brennstoffzellenanordnung (3),
- einem Kühlkreislauf (20) zur Leitung von Kühlfluid über die Brennstoffzellenanordnung (3) zur Kühlung derselben, umfassend eine Kühleinrichtung (22), und
- einer thermisch getriebenen Kältemaschine (4),
**dadurch gekennzeichnet,**
**dass** die thermisch getriebene Kältemaschine (4) zur Nutzung des Kühlfluids zur Versorgung mit einem treibenden Wärmestrom innerhalb des Kühlkreislaufes (20) angeordnet ist.

2. Energiewandelanordnung (1) nach Anspruch 1,
**dadurch gekennzeichnet,**
**dass** innerhalb des Kühlkreislaufes (20) zwischen der Brennstoffzellenanordnung (3) und der thermisch getriebenen Kältemaschine (4) eine Einrichtung zur Temperaturerhöhung (13) des Kühlfluids angeordnet ist.

3. Energiewandelanordnung (1) nach Anspruch 2,
**dadurch gekennzeichnet,**
**dass** die Einrichtung zur Temperaturerhöhung (13) strömungstechnisch in dem Energieträgerkreislauf (10) angeordnet ist und/oder unter Ausnutzung des Druckunterschieds betreibbar ist.

4. Energiewandelanordnung (1) nach Anspruch 3,
**dadurch gekennzeichnet,**
**dass** die Einrichtung zur Temperaturerhöhung (13) zumindest einen ersten Reaktor (14) mit einem Reaktionsmaterial umfasst, in welchem in einem Absorptionsbetrieb unter Ablauf einer thermochemischen Gas-Feststoffreaktion innerhalb eines Reaktionssystems umfassend Energieträger und das Reaktionsmaterial Wärme zur Abgabe an das Kühlfluid erzeugbar bzw. erzeugt ist, wobei Energieträger in dem Reaktionsmaterial absorbiert wird, wobei der erste Reaktor (14) in dem Kühlkreislauf (20) stromauf der thermisch getriebenen Kältemaschine (5) angeordnet ist.

5. Energiewandelanordnung (1) nach Anspruch 4,
**dadurch gekennzeichnet,**
**dass** die Einrichtung zur Temperaturerhöhung (13) zumindest einen zweiten Reaktor (16) mit einem Reaktionsmaterial umfasst, in welchem wechselweise zu dem ersten Reaktor (14) in dem Absorptionsbetrieb Wärme zur Übertragung an das Kühlfluid erzeugbar bzw. erzeugt ist, wobei der zweite Reaktor (16) in dem Kühlkreislauf (20) stromauf der thermisch getriebenen Kältemaschine (4) angeordnet ist.

6. Energiewandelanordnung (1) nach Anspruch 5,
**dadurch gekennzeichnet,**
**dass** in einem Halbzyklus einer der Reaktoren (14, 16) im Absorptionsbetrieb betreibbar bzw. betrieben ist, wobei Energieträger aus der Speichereinrichtung (2) zur Absorption in den jeweiligen Reaktor (14, 16) leitbar bzw. geleitet ist, und der jeweils andere Reaktor (16, 14) stromab der thermisch getriebenen Kältemaschine (5) angeordnet ist und in einem Desorptionsbetrieb betreibbar bzw. betrieben ist, wobei unter Ablauf der umgekehrten thermochemischen Gas-Feststoffreaktion innerhalb des Reaktionssystems Kälte zur Übertragung auf das Kühlfluid erzeugbar bzw. erzeugt ist, wobei Energieträger von dem Reaktionsmaterial unter Wärmeaufnahme desorbiert und an die Brennstoffzellenanordnung (3) geleitet wird,
und **dass** nach einer Halbzykluszeit in einem Umschaltvorgang die Strömungsverbindungen des Energieträgers und/oder des Kühlfluids umschaltbar bzw. umgeschaltet sind und anschließend in dem anderen Halbzyklus die jeweils anderen Reaktoren (16, 14) im Absorptionsbetrieb und im Desorptionsbetrieb betreibbar sind.

7. Energiewandelanordnung (1) nach Anspruch 6,
**dadurch gekennzeichnet,**
**dass** Ventilmittel zur Änderung der Strömungsrichtung des Kühlfluids in dem Kühlkreislauf (20) zeitversetzt umschaltbar bzw. umgeschaltet sind, wobei insbesondere zunächst Ventilmittel stromauf der Reaktoren (14, 16) und nach einer Umschaltzeit stromab angeordnete Ventilmittel umschaltbar bzw. umgeschaltet sind.

8. Energiewandelanordnung (1) nach einem der Ansprüche 4 bis 7,
**dadurch gekennzeichnet,**
**dass** in dem Absorptionsbetrieb ein hoher Betriebsdruck und in dem Desorptionsbetrieb ein diesem gegenüber niedriger Betriebsdruck in dem bzw. den Reaktor/en (14, 16) einstellbar bzw. eingestellt ist.

9. Energiewandelanordnung (1) nach Anspruch 8,
**dadurch gekennzeichnet,**
**dass** der jeweilige Betriebsdruck in dem/den Reaktor/en (14, 16) und/oder die Energieträger-Massenströme zu bzw. von dem/den Reaktor/en (14, 16) in Abhängigkeit von Randbedingungen, insbesondere zur Einhaltung einer erforderlichen Temperatur des Kühlfluids zum Eintritt in die thermisch getriebene Kältemaschine (4) und/oder einer erforderlichen thermischen Leistung, einstellbar bzw. eingestellt ist/sind.

10. Energiewandelanordnung (1) nach einem der Ansprüche 3 bis 9,
**dadurch gekennzeichnet,**
**dass** der Energieträgerkreislauf (10) einen Bypassabschnitt umfasst, mittels dessen die Einrichtung zur Temperaturerhöhung (13) zumindest zeitweise zumindest von einem Teilstrom des Energieträgers umströmbar bzw. umströmt ist.

11. Energiewandelanordnung (1) nach einem der vorhergehenden Ansprüche,
**dadurch gekennzeichnet,**
**dass** der Kühlkreislauf (20) einen Bypassabschnitt umfasst, mittels dessen die Einrichtung zur Temperaturerhöhung (13) und/oder die thermisch getriebene Kältemaschine (4) zumindest zeitweise zumindest von einem Teilstrom des Kühlfluids über einen Bypassabschnitt umströmbar bzw. umströmt ist.

12. Energiewandelanordnung (1) nach einem der Ansprüche 2 bis 11,
**dadurch gekennzeichnet,**
**dass** der Massenstrom des Kühlfluids derart steuerbar bzw. regelbar ist, dass eine Temperatur (T1) des Kühlfluids stromab der Brennstoffzellenanordnung (3) und stromauf der Einrichtung zur Temperaturerhöhung (13) zumindest im Wesentlichen konstant ist.

13. Energiewandelanordnung (1) nach einem der Ansprüche 4 bis 12,
**dadurch gekennzeichnet,**
**dass** das Reaktionsmaterial einen Feststoff aufweisend ein Metallhydrid, insbesondere eine Titan-Mangan-Legierung, umfasst und/oder
**dass** der Energieträger durch Wasserstoff gebildet ist.

14. Energiewandelanordnung (1) nach einem der Ansprüche 6 bis 13,
**dadurch gekennzeichnet,**
**dass** die Kühleinrichtung (22) stromab der thermisch getriebenen Kältemaschine (4) sowie stromauf oder stromab des im Desorptionsbetrieb befindlichen Reaktors (16, 14) angeordnet ist.

15. Verfahren zum Betreiben einer Energiewandelanordnung (1) zur Umwandlung chemischer Energie in elektrische Energie, insbesondere nach einem der vorhergehenden Ansprüche, bei dem elektrische Energie mittels einer Brennstoffzellenanordnung (3) aus einem gasförmigen Energieträger, insbesondere Wasserstoff, erzeugt wird, wobei Energieträger aus einer Speichereinrichtung (2) zur Speicherung des Energieträgers unter Hochdruck, mit einem Druckunterschied zu dem Arbeitsdruck der Brennstoffzellenanordnung (3), entnommen wird und über einen Energieträgerkreislauf (10) von der Speichereinrichtung (2) zu der Brennstoffzellenanordnung (3) geleitet wird, wobei die Brennstoffzellenanordnung (3) mittels innerhalb eines Kühlkreislaufs (20) mit einer Kühleinrichtung (22) geleiteten Kühlfluids gekühlt wird und wobei mittels einer thermisch getriebenen Kältemaschine (4) Kälte erzeugt wird,
**dadurch gekennzeichnet,**
**dass** die thermisch getriebene Kältemaschine (4) mit dem Kühlkreislauf (20) in Strömungsverbindung steht und von dem Kühlfluid mit einem treibenden Wärmestrom versorgt wird.
